# EUROPÄISCHE PATENTSCHRIFT

(11) **EP 3 366 355 B1**
(45) Veröffentlichungstag und Bekanntmachung des Hinweises auf die Patenterteilung: **25.01.2023**
(21) Anmeldenummer: 18158231.3
(22) Anmeldetag: 22.02.2018
(51) Int. Cl.: A62B 35/00, B60P 7/08

(54) **SICHERUNGSVORRICHTUNG**
SECURING DEVICE
DISPOSITIF DE SÉCURISATION

(30) Priorität: 22.02.2017 DE 202017100983 U
(43) Veröffentlichungstag der Anmeldung: 29.08.2018
(73) Patentinhaber: Mittelmann Sicherheitstechnik GmbH & Co. KG, 42551 Velbert (DE)
(72) Erfinder: Rogge, Guido, 42553 Velbert (DE)
(74) Vertreter: IPrime Bonnekamp Sparing Patentanwaltsgesellschaft mbH

(56) Entgegenhaltungen:
- US-A- 3 883 053
- US-B1- 8 333 262

## Beschreibung

Die Erfindung betrifft eine Sicherungsvorrichtung zur Sicherung von Gütern oder Personen.

Aus der Praxis sind Sicherungsvorrichtungen, insbesondere zur Sicherung von Personen, bekannt, wobei die Sicherungsvorrichtungen als Auffanggurte ausgebildet sind. Derartige Auffanggurte dienen insbesondere dazu, kletternde Personen bzw. Personen, die in größerer Höhe arbeiten, im Falle eines Absturzes aufzufangen und so durch den Aufprall verursachte Verletzungen zu verhindern. Der Auffanggurt, welcher dem Benutzer als persönliche Schutzausrüstung dient, wird hierzu an die zu sichernde Person angelegt und der Auffanggurt an einem festen Punkt über geeignete Befestigungsmittel fixiert. Dabei wird das Gurtband zur Anpassung an die Körperproportionen der zu sichernden Person durch Zurückfädeln des Gurtbandes verkürzt, so dass ein sicherer Sitz des Auffanggurtes gewährleistet ist. Nachteilig an diesem aus der Praxis bekannten Vorgehen jedoch ist, dass das Einstellen insbesondere der Länge des Gurtbandes an verschiedenen Stellen erfolgt und so dazu führen kann, dass die Einstellung nicht regelmäßig erfolgt und dabei spätestens bei einer höheren Belastung der Gurtbänder Beschwerden beim Tragen des Auffanggurtes auftreten können. Eine Sicherungsvorrichtung kann aber auch zur Sicherung von Gütern dienen, wobei die zu sichernden Güter beispielsweise gegen einen Verrutschen auf einer Ladefläche eines LKWs durch die Sicherungsvorrichtung gesichert werden. In diesem Fall erfolgt die Einstellung der Länge des Gurtbandes üblicherweise durch Ratschen, wobei auch hier durch unterschiedlich verkürzte Gurtbänder eine unregelmäßige Kraftverteilung auf das zu sichernde Gut auftreten kann.

FR 2 937 254 B1 zeigt eine als Auffanggurt ausgebildete Sicherungsvorrichtung mit einem ersten Gurtband, wobei an dem ersten Gurtband ein als aufblasbares Luftkissen ausgebildetes Anpassungselement befestigt ist. Das Luftkissen ist dabei in Form einer kurzen bzw. langen Hose ausgebildet, wobei das Luftkissen zwischen der den Auffanggurt tragenden Person und dem Gurtband angeordnet ist. Das Anpassungselement wird dabei nach Detektion eines Aufpralls automatisch aufgeblasen, sodass sich das Gesamtvolumen des Anpassungselementes vergrößert. Hierdurch soll verhindert werden, dass durch die auf die Person, insbesondere den Oberschenkelbereich wirkende Kräfte des Gurtbandes im Falle eines Aufpralls eine weitgehende Abschnürung der Blutversorgung der Beine verursacht. Nachteilig an der gezeigten Sicherungsvorrichtung ist dabei, dass das Anpassungselement eine relativ große Fläche der Beine in Anspruch nimmt und so insbesondere im Sommer zu unerwünschten Wärmestaus im Beinbereich führen kann. Des Weiteren wird die Anpassungsmöglichkeit insbesondere der Gurtbänder, welche mit dem Anpassungselement fest verbunden sind, stark eingeschränkt. Somit beschränkt sich die Nutzbarkeit der Sicherungsvorrichtung auf einen bezüglich der Körperproportionen eingeschränkten Personenkreis. Mithin kann dies eine kostenintensive Einzelanfertigung nötig machen.

DE 92 12 844 U1 zeigt eine Sicherungsvorrichtung zur Sicherung von Gütern, welche in Kraftfahrzeugen und auf Lastkraftwagen transportiert werden. Die Sicherungsvorrichtung umfasst dabei ein Gurtband, wobei zwischen dem Gurtband und dem zu sichernden Gut ein als Volumen-vergrößerbares Druckkissen ausgebildetes Anpassungselement angeordnet ist. Das Gurtband ist dabei endseitig an mindestens zwei Befestigungspunkten lösbar festgelegt. Zur Sicherung des Gutes wird das Druckkissen aufgeblasen, sodass das Gut durch den Druck nach unten gedrückt und so gegen ein Verschieben gesichert wird. Nachteilig an der gezeigten Sicherungsvorrichtung ist, dass das Druckkissen über die gesamte Erstreckung des Gurtbandes ausgedehnt ist, sodass der Aufbau relativ kostenintensiv ist. Zudem wird eine relativ große Luftmenge benötigt, sodass auch die Zuführungseinrichtungen für das Füllmedium entsprechend ausgebildet sein müssen.

US 8 333 262 B1 zeigt eine als Sitzgurt ausgebildete Sicherungsvorrichtung zur Sicherung von Personen, umfassend zumindest ein erstes Gurtband, wobei an dem Gurtband ein Rückenpolster angeordnet ist, welches eine verschließbare Tasche aufweist, in welche ein als Luftkissen ausgebildetes Anpassungselement eingebracht werden kann. Das Anpassungselement weist eine erste Innenkammer auf, in welcher die Luft über ein Ventil zugeführt werden kann bzw. abgelassen werden kann. Das Ventil ist dabei manuell betätigbar, um die aus der ersten Innenkammer des Anpassungselementes abzuführende Menge des Füllmediums zu steuern. Das Gesamtvolumen des Anpassungselementes ist entsprechend veränderlich, indem Luft über eine erste Zuführungseinrichtung mit einer ersten Leitung zur Zuführung eines Füllmediums in die zumindest erste Innenkammer des Anpassungselementes zugeführt und über das Ventil wieder abgelassen werden kann. Die Zuführungseinrichtung ist als Handpumpe ausgebildet, welche fest mit dem Ventil des Anpassungselementes verbunden ist. Die Sicherungsvorrichtung umfasst entsprechend eine beispielsweise als Gummiball ausgebildete Betätigungsvorrichtung zur Betätigung der Pumpe.

US 3 883 053 zeigt ein beispielsweise Tragegurt oder Anschnallgurt ausgebildete Sicherungsvorrichtung zur Sicherung von Gütern oder Personen, umfassend zumindest ein erstes Gurtband und ein zwischen der zu sichernden Person bzw. des zu sichernden Gutes angeordnetes Anpassungselement, welches als Luftkissen ausgebildet ist und entsprechend bezüglich seines Gesamtvolumens veränderlich ist. An dem Anpassungselement ist ein Ventil angeordnet, über welches die in dem Luftkissen vorhandene Luft zugeführt bzw. abgelassen werden kann.

Demgegenüber ist es die Aufgabe der vorliegenden Erfindung, eine Sicherungsvorrichtung zur Sicherung von Gütern oder Person anzugeben, welche zuverlässig und flexibel eine Anpassung an die äußeren Proportionen der zu sichernden Güter bzw. der zu sichernden Personen ermöglicht.

Diese Aufgabe wird erfindungsgemäß durch eine Sicherungsvorrichtung zur Sicherung von Gütern oder Personen mit den Merkmalen eines unabhängigen Anspruchs gelöst.

Nach einem Aspekt der Erfindung ist eine Sicherungsvorrichtung zur Sicherung von Gütern oder Personen geschaffen, umfassend zumindest ein erstes Gurtband, zumindest ein an dem ersten Gurtband angeordnetes erstes Anpassungselement mit zumindest einer ersten Innenkammer, wobei das Gesamtvolumen des Anpassungselements veränderlich ist. Weiter umfasst die Sicherungsvorrichtung ein zweites Gurtband und ein an dem zweiten Gurtband angeordnetes drittes Anpassungselement, wobei zumindest ein an dem zweiten Gurtband angeordnetes zweites Anpassungselement mit zumindest einer Innenkammer vorgesehen ist. Weiter umfasst die Sicherungsvorrichtung eine erste Zuführungseinrichtung mit einer ersten Leitung zur Zuführung eines Füllmediums in die zumindest erste Innenkammer des ersten Anpassungselements, eine erste Betätigungsvorrichtung zur Betätigung der Zuführungseinrichtung und eine zweite Betätigungsvorrichtung (12b) zur Betätigung der zweiten. Weiter umfasst die Sicherungsvorrichtung eine zweite Zuführungseinrichtung zur Zuführung eines Füllmediums in das zweite Anpassungselement bzw. das dritte Anpassungselement. Die Betätigungsvorrichtung umfasst dabei zumindest eine manuelle Pumpeinrichtung, wobei eine manuell betätigbare Ventilanordnung zur Steuerung der aus der ersten Innenkammer des ersten Anpassungselementes abzuführenden Menge des Füllmediums vorgesehen ist und die Betätigungsvorrichtung und die manuell betätigbare Ventilanordnung jeweils für mehrfache Betätigungszyklen ausgelegt sind. Hierdurch kann vorteilhaft eine mehrfache Verwendung der Sicherungsvorrichtung bzw. eine Anpassung der Sicherungsvorrichtung an die äußeren Proportionen der zu sichernden Güter oder der zu sichernden Personen erfolgen. Die Sicherungsvorrichtung zeichnet sich dabei dadurch aus, dass die zweite Zuführungseinrichtung mehrere Leitungen umfasst, wobei die Leitungen untereinander derart verbunden sind, dass eine der Leitungen als Hauptzuführungsleitung und zwei weitere Leitungen abgezweigt werden, so dass das zweite Anpassungselement und das dritte Anpassungselement über die eine Hauptzuführungsleitung befüllt werden können. Vorteilhaft können so mehrere Anpassungselemente, welche an einem oder mehreren Gurtbändern angeordnet sind, mit dem Füllmedium gefüllt werden. Vorteilhaft ist nur eine Zuführungseinrichtung für mehrere Anpassungselemente notwendig. Somit werden entsprechende Zusatzkosten eingespart und die Bedienung der Sicherungsvorrichtung vereinfacht.

Bevorzugt ist vorgesehen, dass die Leitungen elastisch ausgebildet sind.

Hierdurch wird vorteilhaft ermöglicht, dass die Leitungen variabel an die jeweils gegebene Situation positioniert werden können, wobei gleichzeitig die Zuführung des Füllmediums in das Anpassungselement zuverlässig möglich ist. Bevorzugt umfasst die Sicherungsvorrichtung eine an dem Gurtband angeordnete erste Befestigungsvorrichtung zur Befestigung des ersten Anpassungselements. Hierdurch wird vorteilhaft erreicht, dass eine flexible Anpassung der Sicherungsvorrichtung an die äußeren Proportionen der zu sichernden Güter oder Personen erfolgen kann. Hierdurch wird zudem ein schnelles Anlegen der Sicherungsvorrichtung ermöglicht und gleichzeitig eine komfortable und zuverlässige Sicherung der zu sichernden Güter oder Personen gewährleistet.

In einer besonders bevorzugten Ausgestaltung ist vorgesehen, dass zumindest ein die Innenkammer aufweisender Abschnitt des Anpassungselementes in Gebrauchsstellung auf der dem zu sichernden Gut oder der zu sichernden Person zugewandten Seite des ersten Gurtbandes angeordnet ist. Vorteilhaft wird so nach dem Anlegen des Gurtbandes der noch vorhandene Zwischenraum zwischen dem zu sichernden Gut bzw. der zu sichernden Person und dem Gurtband im Bereich des Anpassungselementes ausgefüllt. Das Gurtband wird dadurch so gestrafft, dass die Sicherungsvorrichtung sicher an dem zu sichernden Gut bzw. der zu sichernden Person anliegt.

Das Anpassungselement weist in einer vorteilhaften Weiterbildung zumindest einen elastischen Bestandteil auf. Dieser elastische Bestandteil ist dabei insbesondere derjenige Abschnitt des Anpassungselementes, welcher zumindest teilweise die erste Innenkammer des Anpassungselementes begrenzt. Vorteilhaft kann so über eine Volumenvergrößerung der ersten Innenkammer das Gesamtvolumen des Anpassungselementes verändert werden, wobei sich der elastische Bestandteil an die äußere Form des zu sichernden Gutes bzw. der zu sichernden Person anpassen kann.

Besonders bevorzugt ist das Anpassungselement als aufblasbares Luftkissen ausgebildet. Vorteilhaft kann die Volumenvergrößerung des Anpassungselementes besonders kostengünstig durch Zuführung von Luft erfolgen. Das Luftkissen weist dabei bevorzugt eine Außenfläche auf, welche hautverträglich und weich ist, sodass der Tragekomfort selbst bei einem direkten Hautkontakt des Anpassungselementes mit der zu sichernden Person besonders hoch ist.

In einer vorteilhaften Ausgestaltung ist vorgesehen, dass die Befestigungsvorrichtung gemeinsam mit dem Anpassungselement entlang der Längsrichtung des Gurtbandes verlagerbar ist. Vorteilhaft wird so erreicht, dass das Anpassungselement durch die Befestigungsvorrichtung besonders sicher gehalten werden kann, wobei gleichzeitig die Verlagerbarkeit des Anpassungselementes zumindest entlang einer Längsrichtung des Gurtbandes ermöglicht wird. Eine derartige Befestigungsvorrichtung kann beispielsweise als Schlittensystem ausgebildet sein, wobei das Anpassungselement mit einem auf einer Schlittenbahn entlang der Längsrichtung des Gurtbandes verfahrbaren Schlittens fest verbunden ist. Möglich sind aber jedoch auch Befestigungsvorrichtungen wie entlang der Längsrichtung des Gurtbandes verschiebbare Klettverschlusssysteme. Alternativ oder auch zusätzlich kann zudem vorgesehen sein, dass das Anpassungselement relativ zu der Befestigungsvorrichtung zumindest entlang der Längsrichtung des Gurtbandes verlagerbar ist.

Die Befestigungsvorrichtung weist in einer Weiterbildung zumindest ein erstes Befestigungselement auf. Das Befestigungselement ist dabei der Teil der Befestigungsvorrichtung, welcher eine Wirkverbindung zwischen dem Gurtband und dem Anpassungselement herstellt. Das Befestigungselement kann dabei beispielsweise als Klettverschlusselement, Reißverschlusselement, Druckknopfverschlusselement oder Ähnlichem ausgebildet sein. Bevorzugt ist das Befestigungselement dabei elastisch ausgebildet, sodass sich das Befestigungselement bei einer Volumenveränderung des Anpassungselementes ebenfalls in seiner Form anpassen kann. Vorteilhaft wird so der Tragekomfort der Sicherungsvorrichtung erhöht und die Anpassungsform ist besonders flexibel.

In einer besonders bevorzugten Ausgestaltung ist das Befestigungselement als Manschette ausgebildet, wobei die Manschette das Anpassungselement und das Gurtband umschließt. Vorteilhaft wird hierdurch erreicht, dass sowohl die Möglichkeit besteht, dass Anpassungselement gemeinsam mit dem als Manschette ausgebildeten Befestigungselement entlang der Längsrichtung des Gurtbandes zu verlagern, als auch das Anpassungselement innerhalb der Manschette entlang der Längsrichtung des Gurtbandes zu verlagern. Zudem wird hierdurch ebenfalls eine einfache Möglichkeit zum Austauschen von Anpassungselementen gewährleistet. Die Manschette ist elastisch ausgebildet, so dass diese das Anpassungselement sowohl im nicht Volumen-vergrößerten Zustand des Anpassungselementes als auch nach einer VolumenVergrößerung des Anpassungselementes ausreichend sicher hält, jedoch gleichzeitig eine Verlagerung sowohl der Manschette als auch des Anpassungselementes zumindest entlang der Längsrichtung des Gurtbandes möglich macht.

In einer vorteilhaften Weiterbildung ist die Befestigungsvorrichtung mit dem Gurtband lösbar verbunden. Hierdurch wird vorteilhaft erreicht, dass für den Fall dass eine Beschädigung der Befestigungsvorrichtung oder eine Fehlfunktion auftritt, ein einfaches Auswechseln derselben möglich wird. Im Falle, dass das Befestigungselement als Manschette ausgebildet ist, ist vorgesehen, dass die Manschette entsprechende Verschlussmechanismen aufweist, die es ermöglichen, die Manschette um das Anpassungselement und das Gurtband umzulegen und entsprechend zu verschließen und dabei gegebenenfalls zum Beispiel bei einer äußeren Beschädigung der Manschette einen einfachen Austausch durch Öffnung des Verschlusses zu gewährleisten.

Das Anpassungselement weist in einer Ausgestaltung zwei oder mehr Innenkammern auf. Vorteilhaft kann so die Anpassbarkeit der Sicherungsvorrichtung weiter erhöht werden. Insbesondere für stark gekrümmte Bereiche des zu sichernden Gutes bzw. der zu sichernden Person ergeben sich entsprechende Vorteile, da die Möglichkeit besteht, zwischen den einander benachbarten Innenkammern auch stark gekrümmte Zwischenbereiche vorzusehen, ohne die Anpassungselemente bzw. die Innenkammern beispielsweise durch Kanten des zu sichernden Gutes zu beschädigen.

In einer besonders bevorzugten Weiterbildung ist vorgesehen, dass eine Fluidverbindung zwischen den zumindest zwei Innenkammern besteht. Hierdurch wird vorteilhaft erreicht, dass beide Innenkammern über nur einen Zugang mit einem Fluid befüllt werden können und so besonders kostengünstig eine gleichmäßige Volumenvergrößerung des gesamten Anpassungselementes erfolgen kann. Alternativ hierzu kann es jedoch auch vorgesehen sein, dass die Innenkammern voneinander getrennt sind, sodass eine individuelle Anpassung des Volumens der Innenkammern erfolgen kann.

In einer vorteilhaften Ausgestaltung ist das Anpassungselement lösbar mit dem Gurtband verbunden. Dabei kann vorgesehen sein, dass das Anpassungselement gemeinsam mit der Befestigungsvorrichtung oder auch unabhängig von der Befestigungsvorrichtung von dem Gurtband gelöst werden kann. Vorteilhaft kann so das Anpassungselement bei einem Defekt oder ähnlichem schnell und sicher ausgetauscht werden.

In einer Weiterbildung ist vorgesehen, dass das Anpassungselement um eine parallel zur Längsrichtung verlaufende Achse des Gurtbandes drehbar ist. Vorteilhaft ist es hierdurch möglich, die durch das Anpassungselement auf das zu sichernde Gut bzw. der zu sichernden Person ausgeübte Kraft gezielter zu verteilen und die Anpassungsmöglichkeiten weiter zu verbessern. Weiter wird vorteilhaft ermöglicht, das Anpassungselement so weit um die parallel zur Längsrichtung verlaufende Achse des Gurtbandes zu drehen, dass das Anpassungselement auf der dem zu sichernden Gut bzw. der zu sichernden Person abgewandten Seite des Gurtbandes angeordnet ist.

In einer günstigen Ausgestaltung überdeckt das Anpassungselement abschnittsweise entlang der Längsrichtung des Gurtbandes zumindest einen Großteil der Breite des Gurtbandes. Vorteilhaft wird das Gurtband bei einer Volumenvergrößerung des Anpassungselementes so gleichmäßig gespannt, wobei einer Gefahr eines Verdrehens des Gurtbandes vorgebeugt wird. Dabei ist das Anpassungselement besonders bevorzugt mittig bezüglich der Querrichtung des Gurtbandes angeordnet.

In einer bevorzugten Weiterbildung ist zumindest ein zweites Gurtband vorgesehen. Das zweite Gurtband ist dabei in einer günstigen Ausgestaltung mit dem ersten Gurtband verbunden. Vorteilhaft wird die von der Sicherungsvorrichtung bereitgestellte Haltekraft weiter erhöht und ermöglicht zudem eine erweiterte und flexiblere Anpassungsmöglichkeit an das zu sichernde Gut bzw. der zu sichernden Person.

Bevorzugt ist zumindest ein an dem zweiten Gurtband angeordnetes zweites Anpassungselement mit zumindest einer Innenkammer vorgesehen. Vorteilhaft kann so auch das zweite Gurtband durch Veränderungen des Gesamtvolumens des Anpassungselementes an das zu sichernde gut bzw. die zu sichernde Person sicher angelegt werden, sodass der Gefahr einer Beschädigung des Gutes oder Verletzung der zu sichernden Person vorgebeugt wird. Dabei ist zur Befestigung des zweiten Anpassungselementes zweckmäßig eine zweite Befestigungsvorrichtung vorgesehen.

In einer günstigen Ausgestaltung ist an dem Gurtband ein Verbindungselement zur Verbindung mit einer Befestigungseinrichtung vorgesehen. Die Befestigungseinrichtung kann dabei beispielsweise ein Anschlagpunkt sein, an welchem die Sicherungsvorrichtung über das Verbindungselement eingehängt werden kann. Für den Fall einer beabsichtigten Sicherung eines Gutes umfasst die Befestigungseinrichtung Befestigungsmittel zur Fixierung des Verbindungselementes bzw. der Sicherungsvorrichtung an beispielsweise einer Ladefläche eines LKWs.

In einer besonders vorteilhaften Ausgestaltung ist eine Zuführungseinrichtung mit einer ersten Leitung zur Zuführung eines Füllmediums in die zumindest erste Innenkammer des Anpassungselements vorgesehen. Die Zuführungseinrichtung dient dabei dazu, die Vergrößerung des Gesamtvolumens des Anpassungselementes zu ermöglichen, indem das Füllmedium in die Innenkammer des Anpassungselementes zugeführt wird und durch den sich aufbauenden Druck eine Vergrößerung der Innenkammer und somit des gesamten Anpassungselementes bezüglich des Volumens erfolgt.

Das Anpassungselement ist bevorzugt zur Aufnahme eines als Fluid ausgebildeten Füllmediums ausgebildet. Besonders bevorzugt ist das Anpassungselement zur Aufnahme eines gasförmigen Füllmediums ausgebildet. Vorteilhaft kann das Anpassungselement bei einer starken Krafteinwirkung von außen, insbesondere im Falle eines Absturzes der zu sichernden Person, die auf die Person wirkenden Kräfte verteilen und somit Verletzungen vorbeugen. Besonders bevorzugt ist das Füllmedium Luft. Vorteilhaft ist eine besonders kostengünstige und praktische Anpassung der Sicherungsvorrichtung möglich.

In einer Weiterbildung der Sicherungsvorrichtung ist eine Betätigungsvorrichtung zur Betätigung der Zuführungseinrichtung vorgesehen. Die Betätigungsvorrichtung dient dabei dazu, dass die zu sichernde Person die Möglichkeit hat, manuell ein Füllmedium in das Anpassungselement zuzuführen, umso die gewünschte Passform der Sicherungsvorrichtung selbst zu bestimmen. In einer bevorzugten Ausgestaltung umfasst die Betätigungsvorrichtung zumindest eine Pumpe. Die Pumpe ist dabei bevorzugt manuell betreibbar ausgebildet, sodass eine besonders kostengünstige und gewichtssparende Möglichkeit der Zuführung des Füllmediums besteht. Besonders bevorzugt ist die Pumpe dabei als Pumpball ausgebildet. Jedoch sind ebenso andere Arten von Handpumpen denkbar wie beispielsweise Kolbenpumpen, insbesondere Luftpumpen, wie sie beispielsweise zum Aufpumpen von Fahrradreifen verwendet werden.

In einer alternativen Ausgestaltung der Sicherungsvorrichtung ist die Pumpe zur Zuführung des Füllmediums motorisch betreibbar ausgebildet. Vorteilhaft ist dabei, dass das Anpassungselement ohne Kraftanstrengung der zu sichernden bzw. sichernden Person angepasst werden kann. In einer Weiterbildung kann dabei zudem vorgesehen sein, dass die Pumpe automatisiert betrieben werden und der Beginn und das Ende eines Pumpzyklus voreingestellt werden kann. Der Beginn des Pumpzyklus kann von einer äußeren Bedingung, beispielsweise dem Verschließen einer an der Sicherungsvorrichtung vorgesehenen Schnalle oder dem Drücken eines Knopfes, abhängig gemacht werden. Das Ende des Pumpzyklus kann dabei entweder nach Ablauf einer gewissen voreingestellten Zeit erfolgen oder beispielsweise von dem in der Innenkammer des Anpassungselementes herrschenden Druckes abhängig sein. In einer besonders zweckmäßigen Ausgestaltung umfasst die Zuführungseinrichtung Sensoren zur Ermittlung zumindest eines Zustandes des Anpassungselementes, insbesondere den Druck innerhalb der Innenkammer des Anpassungselementes.

In einer besonders bevorzugten Weiterbildung ist eine Ventilanordnung zur Steuerung der in die Innenkammer des Anpassungselementes zuzuführenden bzw. abzuführenden Menge eines Füllmediums vorgesehen. Vorteilhaft wird erreicht, dass der Druck innerhalb der Innenkammer des Anpassungselementes flexibel angepasst werden kann, insbesondere für den Fall, dass das Anpassungselement auf die zu sichernde Person oder das zu sichernde Gut ein zu enges Anliegen des Gurtbandes verursacht. Hierbei ist ein einer bevorzugten Ausgestaltung vorgesehen, dass die Ventilanordnung zumindest ein manuell betätigtes Ventil umfasst. Das Ventil kann somit durch den Benutzer der Sicherungsvorrichtung betätigt werden, wodurch der Benutzer den durch das Gurtband verursachtem Druck auf das zu sichernde Gut bzw. die zu sichernde Person komfortabel einstellen kann. Alternativ oder zusätzlich kann weiter vorgesehen sein, dass die Ventilanordnung zumindest ein elektromagnetisch oder elektromotorisch betätigtes Ventil umfasst. In einer Weiterbildung umfasst die Ventilanordnung eine Steuerungsvorrichtung zur Regelung des in der Innenkammer des Anpassungselementes herrschenden Druckes. Hierdurch wird vorteilhaft ermöglicht, eine automatische Ansteuerung der Ventilanordnung zu realisieren. Dies ist besonders bei dynamischen Krafteinwirkungen auf die Sicherungsvorrichtung bzw. die zu sichernden Güter oder Personen von Vorteil, da entsprechend der jeweiligen Situation der in der Innenkammer des Anpassungselements herrschende Druck angepasst werden kann.

Nach einem weiteren Aspekt ist eine Sicherungsvorrichtung zur Sicherung von Gütern oder Personen geschaffen, umfassend zumindest ein erstes Gurtband, zumindest ein an dem ersten Gurtband angeordnetes erstes Anpassungselement mit zumindest einer ersten Innenkammer, wobei das Gesamtvolumen des Anpassungselements veränderlich ist. Die Sicherungsvorrichtung zeichnet sich dabei dadurch aus, dass das Anpassungselement das Gurtband umschließt. Vorteilhaft kann das Anpassungselement an dem ersten Gurtband ohne eine zusätzliche Befestigungsvorrichtung befestigt werden, wobei eine Verlagerung entlang einer Längsrichtung des Gurtbandes dadurch ermöglicht wird, dass das Anpassungselement zumindest im nicht Volumen-vergrößerten Zustand einen so geringen Reibungswiderstand gegenüber dem Gurtband aufweist, dass das Anpassungselement entlang der Längsrichtung Gurtband verschoben werden kann.

Nach einem weiteren Aspekt ist ein Auffanggurt geschaffen, umfassend ein erstes Gurtband, ein zweites Gurtband, ein erstes an dem ersten Gurtband angeordnetes Anpassungselement und ein zweites an dem zweiten Gurtband angeordnetes Anpassungselement. Der Auffanggurt zeichnet sich dadurch aus, dass das erste Anpassungselement eine erste Innenkammer und das zweite Anpassungselement eine zweite Innenkammer aufweist und das jeweilige Gesamtvolumen des ersten Anpassungselementes bzw. des zweiten Anpassungselementes durch Zuführung eines Füllmediums veränderlich ist.

Weitere Vorteile, Merkmale, Eigenschaften und Weiterbildungen der Erfindung ergeben sich aus den abhängigen Ansprüchen sowie aus der nachfolgenden Beschreibung eines bevorzugten Ausführungsbeispiels.

Die Erfindung wird nachstehend unter Bezugnahme auf die anliegenden Zeichnungen anhand eines bevorzugten Ausführungsbeispiels näher erläutert.
- Fig. 1: zeigt ein erstes Ausführungsbeispiel einer erfindungsgemäßen als Auffanggurt ausgebildeten Sicherungsvorrichtung in einer Perspektivansicht.
- Fig. 2: zeigt ein Ausführungsbeispiel eines an einem Gurtband angeordneten Anpassungselementes in einer Frontansicht.
- Fig. 3: zeigt das Ausführungsbeispiel des an einem Gurtband angeordneten Anpassungselementes aus Fig. 2 in einer Draufsicht.
- Fig. 4: zeigt eine Schnittansicht auf die Schnitt-Ebene A-A aus Fig. 3.

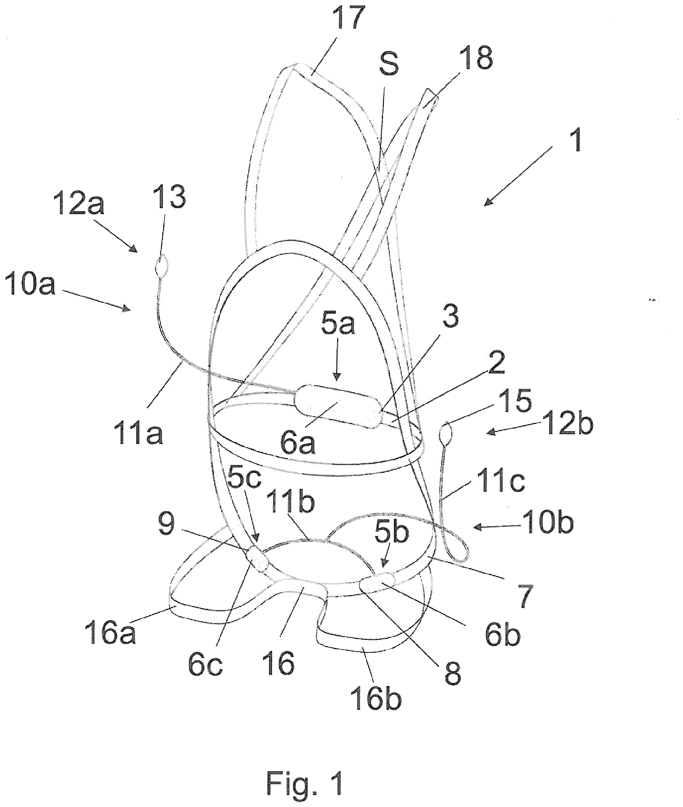

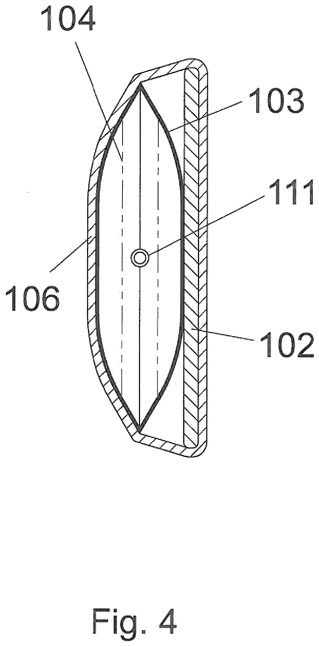

Fig. 1 zeigt ein erstes Ausführungsbeispiel einer erfindungsgemäßen, hier als Auffanggurt ausgebildeten Sicherungsvorrichtung 1 in einer Perspektivansicht. Der Auffanggurt 1 umfasst dabei Gurtbänder, welche teilweise miteinander fest verbunden sind, sodass eine zusammenhängende Struktur gebildet wird, welche die von der zu sichernden Person verursachten Kräfte aufnimmt. Die Sicherungsvorrichtung 1 weist dabei ein erstes Gurtband 2 auf, welches als Brustgurt ausgebildet ist. Das erste Gurtband 2 ist dabei als Schlaufe ausgebildet, welche die zu sichernde Person in Brusthöhe umschließt. Auf der dem Rücken der zu sichernden Person zugewandten Seite des ersten Gurtbandes 2 ist ein als Luftkissen ausgebildetes Anpassungselement 3 angeordnet. Das Anpassungselement 3 weist eine in Fig. 4 gezeigte Innenkammer auf und ist über eine erste Befestigungsvorrichtung 5a an dem ersten Gurtband 2 befestigt, wobei die erste Befestigungsvorrichtung 5a ein erstes Befestigungselement 6a aufweist, welches das erste Anpassungselement 3 umschließt. Das erste Befestigungselement 6a ist dabei als Manschette ausgebildet, welche elastisch ist und so bei einer Volumenvergrößerung des ersten Anpassungselementes 3 mitverformt wird.

Die Volumenvergrößerung des als Luftkissen ausgebildeten ersten Anpassungselementes 3 wird durch Zuführung von Luft mittels einer Zuführungseinrichtung 10a realisiert. Die erste Zuführungseinrichtung 10a umfasst dabei eine erste Leitung 11a, welche elastisch ausgebildet ist mit einem ersten Ende mit dem ersten Anpassungselement 3 verbunden ist. An einem zweiten Ende der ersten Leitung 11a ist eine erste Betätigungsvorrichtung 12a angeordnet. Die erste Betätigungsvorrichtung 12a weist dabei eine als Ballpumpe ausgebildete, manuell betriebene Pumpe 13 auf, welche durch die zu sichernde Person bequem erreichbar ist und so im angelegten Zustand des Auffanggurtes 1 in einfacher Weise jederzeit betätigt werden kann.

Der Auffanggurt 1 weist weiter ein zweites Gurtband 7 auf, welches an zwei sich gegenüber liegenden Stellen einer der zu sichernden Person zugewandten Seite des ersten Gurtbandes 2 an dem ersten Gurtband 2 befestigt ist. Das zweite Gurtband 7 ist als geschlossene Schlaufe ausgebildet. In einem unteren Bereich des zweiten Gurtbandes 7 ist ein zweites Anpassungselement 8 und ein drittes Anpassungselement 9 angeordnet, wobei das zweite Anpassungselement 8 und das dritte Anpassungselement 9 über eine jeweils ihnen zugeordnete zweite Befestigungsvorrichtung 5b und dritte Befestigungsvorrichtung 5c an dem zweiten Gurtband 7 befestigt sind. Die zweite Befestigungsvorrichtung 5b und die dritte Befestigungsvorrichtung 5c weisen dabei jeweils ein als Manschette ausgebildetes zweites Befestigungselement 6b bzw. drittes Befestigungselement 6c auf. Das zweite Befestigungselement 6b und das dritte Befestigungselement 6c sind als Manschetten ausgebildet und umschließen dabei jeweils das ihnen zugeordnete zweite Anpassungselement 8 bzw. das dritte Anpassungselement 9. Das zweite Anpassungselement 8 und das dritte Anpassungselement 9 sind dabei an der der zu sichernden Person zugewandten Seite des zweiten Gurtbandes 7 angeordnet.

Zur Zuführung von Luft in das zweite Anpassungselement 8 bzw. das dritte Anpassungselement 9 weist die Sicherungsvorrichtung 1 eine zweite Zuführungseinrichtung 10b auf. Die zweite Zuführungseinrichtung 10b weist dabei eine zweite elastische Leitung 11b auf, wobei ein erstes Ende der zweiten elastischen Leitung 11b mit dem zweiten als Luftkissen ausgebildeten Anpassungselement 8 und ein zweites Ende der zweiten elastischen Leitung 11b mit dem dritten als Luftkissen ausgebildeten Anpassungselement 9 verbunden ist. In einem mittleren Bereich der zweiten elastischen Leitung 11b ist ein erstes Ende einer dritten elastischen Leitung 11c angeschlossen, wobei die die dritte elastische Leitung 11c in etwa einem rechten Winkel von der zweiten elastischen Leitung 11b abzweigt. An einem zweiten Ende der dritten elastischen Leitung 11c ist eine zweite Betätigungsvorrichtung 12b angeordnet, wobei die zweite Betätigungsvorrichtung 12b eine als Ballpumpe ausgebildete Pumpe15 aufweist. Durch die Verbindung der zweiten Betätigungsvorrichtung 12b mit der zweiten elastischen Leitung 11b, welche mit ihren Enden mit dem zweiten Anpassungselement 8 bzw. dem dritten Anpassungselement 9 verbunden ist, ist es möglich, Luft gleichzeitig durch Betätigung der zweiten Betätigungsvorrichtung 12b in das zweite Anpassungselement 8 bzw. das dritte Anpassungselement 9 zuzuführen. Vorteilhaft erfolgt eine gleichmäßige Anpassung der Passform des Auffanggurtes an die äußeren Proportionen der zu sichernden Person.

An dem zweiten Gurtband 7 ist im unteren Bereich weiter ein drittes Gurtband 16 angeordnet, wobei das dritte Gurtband 16 als Beingurt ausgebildet ist. Das dritte Gurtband 16 ist dabei mit einem ersten Ende oberhalb des ersten Anpassungselementes 8 und mit einem zweiten Ende oberhalb des zweiten Anpassungselementes 9 befestigt. In einem Bereich zwischen dem zweiten Anpassungselement 8 und dem dritten Anpassungselement 9 ist das dritte Gurtband 16 nochmals befestigt, sodass zwei die Vorderseiten der Beine der zu sichernden Person umlaufende Schlaufen 16a, 16b gebildet werden. Der Auffanggurt 1 weist schließlich ein viertes Gurtband 17 und ein fünftes Gurtband 18 auf, welche mit einem ersten Ende an dem ersten Gurtband 2 und einem zweiten Ende an dem zweiten Gurtband 7 befestigt sind. Das vierte Gurtband 17 und das fünfte Gurtband 18 überkreuzen sich dabei an einer Stelle S und fungieren gemeinsam als Schultergurt.

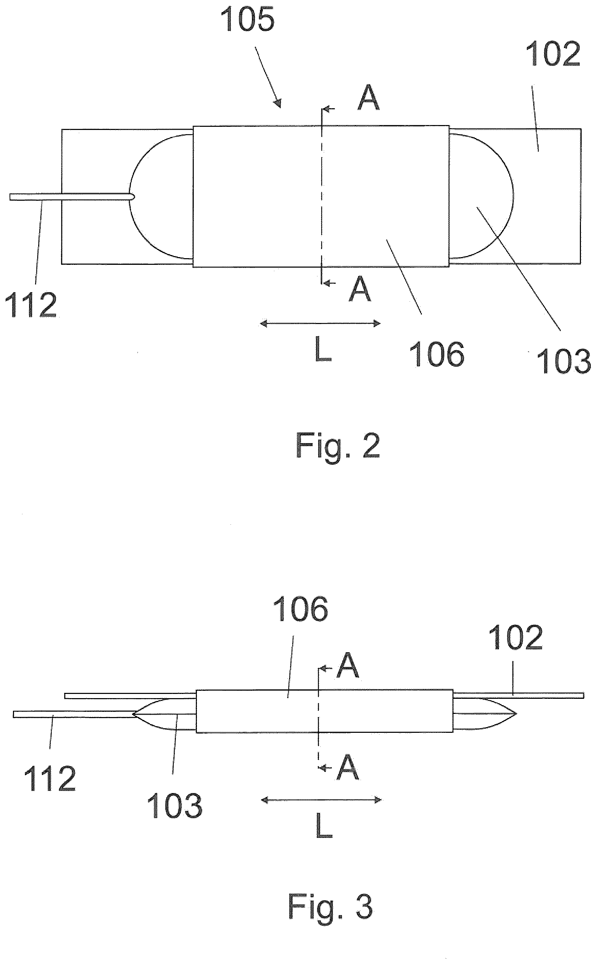

Fig. 2 zeigt ein Ausführungsbeispiel eines an einem Gurtband 102 angeordneten Anpassungselementes 103 in einer Frontansicht. Dieselben oder strukturell vergleichbare Teile sind dabei mit denselben Bezugszeichen wie bei dem Ausführungsbeispiel gemäß Fig. 1 bezeichnet. Geänderte Teile sind hingegen mit um 100 gegenüber den in Fig. 1 gezeigten Teilen inkrementierten Bezugszeichen bezeichnet.

Das als Luftkissen ausgebildete Anpassungselement 103 ist an dem Gurtband 102 mittels einer Befestigungsvorrichtung 105 befestigt. Die Befestigungsvorrichtung 105 weist dabei ein Befestigungselement 106 auf, welches als elastische Manschette ausgebildet ist und das Anpassungselement 103 umschließt. Das Anpassungselement 3 ist dabei mit einer Leitung 112 verbunden, durch welche Luft in das Anpassungselement 103 zugeführt werden kann.

Fig. 3 zeigt das in Fig. 2 gezeigte Ausführungsbeispiel eines an einem Gurtband 102 angeordneten Anpassungselementes 103 in einer Draufsicht. Wie gut zu erkennen, umschließt das Befestigungselement 106 das Anpassungselement 103 und das Gurtband 102, sodass das Anpassungselement 103 an dem Gurtband 102 sicher anliegt. Dabei ist die durch das Befestigungselement 106 ausgeübte Haltekraft auf das Anpassungselement 103 abhängig von der durch die Leitung 111 in das als Luftkissen ausgebildete Anpassungselement 103 zugeführten Menge der Luft. Das Anpassungselement 103 ist dabei relativ zu dem Befestigungselement 106 entlang einer Längsrichtung L des Gurtbandes 102 verlagerbar. Das Befestigungselement 106 selbst ist dabei auch gemeinsam mit dem Anpassungselement 103 entlang der Längsrichtung L des Gurtbandes 102 verlagerbar.

Fig. 4 zeigt eine Ansicht auf die Schnitt-Ebene A-A aus Fig. 3. In dieser Darstellung ist gut das durch das Befestigungselement 106 an das Gurtband 102 befestigte Anpassungselement 103 erkennen. Das Anpassungselement 103 weist eine Innenkammer 104 auf, in welche Luft über die Leitung 111 zugeführt werden kann. Die Leitung 111 ist dabei im Zentrum der Außenseite des Anpassungselementes 103 angeordnet. Durch Zuführung der Luft über die Leitung 111 wird der Querschnitt der Innenkammer 104 vergrößert und so das Gurtband 102 gespannt, sodass nach dem Anlegen des Auffanggurtes eine komfortable Anpassung an die äußeren Proportionen der zu sichernden Person erfolgen kann.

Die Erfindung ist vorstehend anhand von Ausführungsbeispielen erläutert worden, bei denen das Anpassungselement über als Manschette ausgebildete Befestigungselemente an dem Gurtband befestigt wurde. Die Verlagerung des Anpassungselementes entlang der Längsrichtung des Gurtbandes erfolgt im Wesentlichen dadurch, dass die zu sichernde Person das Anpassungselement innerhalb der Manschette verschiebt oder die Manschette gemeinsam mit dem Anpassungselement entlang der Längsrichtung des Gurtbandes verlagert. Es versteht sich, dass zur Befestigung des Anpassungselementes auch andere Befestigungsvorrichtungen vorgesehen sein können, soweit nur eine Verlagerbarkeit des Anpassungselementes entlang der Längsrichtung des Gurtbandes möglich ist. Dabei kann beispielsweise in einer leichten Abänderung der gezeigten Ausführungsbeispiele vorgesehen sein, dass das als Manschette ausgebildete Befestigungselement in Längsrichtung des Gurtbandes durch Vernähen oder ähnliche Befestigungsmethoden fest an dem Gurtband angeordnet ist. Ebenso ist möglich, dass das Anpassungselement fest mit dem Befestigungselement verbunden ist, wobei das Befestigungselement jedoch in Längsrichtung des Gurtbandes verlagerbar ist.

Die Erfindung ist vorstehend anhand von Ausführungsbeispielen erläutert worden, bei denen das Anpassungselement über ein gesondertes Befestigungselement an einem Gurtband befestigt ist. Es versteht sich, dass das Anpassungselement auch ohne ein gesondertes Befestigungselement bzw. eine Befestigungseinrichtung an dem Gurtband angeordnet sein kann. Beispielsweise kann vorgesehen sein, dass das Anpassungselement selbst das Gurtband umschließt und nur abschnittsweise eine Innenkammer aufweist, sodass das Anpassungselement in Längsrichtung des Gurtbandes durch Verschieben verlagerbar ist. Dabei kann das Anpassungselement zudem mehrere Innenkammern aufweisen, sodass es möglich ist, beispielsweise eine erste Innenkammer auf der der zu sichernden Person zugewandten Seite des Gurtbandes und eine zweite Innenkammer auf der der zu sichernden Person abgewandten Seite des Gurtbandes vorzusehen.

Die Erfindung ist vorstehend anhand von einem Ausführungsbeispiel erläutert worden, bei dem mehrere Anpassungselemente gleichzeitig über eine Zuführungseinrichtung mit Luft versorgt werden.

## Patentansprüche

1. Sicherungsvorrichtung zur Sicherung von Gütern oder Personen, umfassend
zumindest ein erstes Gurtband (2; 102),
zumindest ein an dem ersten Gurtband (2; 102) angeordnetes erstes Anpassungselement (3; 103) mit zumindest einer ersten Innenkammer (104), wobei das Gesamtvolumen des ersten Anpassungselements (3; 103) veränderlich ist,
ein zweites Gurtband (7), wobei zumindest ein an dem zweiten Gurtband (7) angeordnetes zweites Anpassungselement (8) mit zumindest einer Innenkammer vorgesehen ist,
ein an dem zweiten Gurtband (7) angeordnetes drittes Anpassungselement (9),
eine erste Zuführungseinrichtung (10a) mit einer ersten Leitung (11a) zur Zuführung eines Füllmediums in die zumindest erste Innenkammer (104) des ersten Anpassungselements (3; 103),
eine zweite Zuführungseinrichtung (1 0b) zur Zuführung eines Füllmediums in das zweite Anpassungselement (8) bzw. das dritte Anpassungselement (9),
eine erste Betätigungsvorrichtung (12a) zur Betätigung der ersten Zuführungseinrichtung (10a) und eine zweite Betätigungsvorrichtung (12b) zur Betätigung der zweiten Zuführungseinrichtung (10b), wobei die Betätigungsvorrichtung (12a; 12b) zumindest eine manuelle Pumpeinrichtung (13; 15) umfasst, wobei eine manuell betätigbare Ventilanordnung zur Steuerung der aus der ersten Innenkammer (104) des ersten Anpassungselementes (3; 103) abzuführenden Menge des Füllmediums vorgesehen ist, und
wobei die Betätigungsvorrichtung und die manuell betätigbare Ventilanordnung jeweils für mehrfache Betätigungszyklen ausgelegt ist, **dadurch gekennzeichnet,**
**dass** die zweite Zuführungseinrichtung (10b) mehrere Leitungen (11b; 11c) umfasst, wobei die Leitungen (11b; 11c) untereinander derart verbunden sind, dass eine der Leitungen (11b; 11c) als Hauptzuführungsleitung (11b) und zwei weitere Leitungen (11c) abgezweigt werden, so dass das zweite Anpassungselement (8) und das dritte Anpassungselement (9) über die eine Hauptzuführungsleitung (11b) befüllt werden können.

2. Sicherungsvorrichtung nach Anspruch 1, **dadurch gekennzeichnet, dass** die Leitungen (11a, 11b, 11c) elastisch ausgebildet sind.

3. Sicherungsvorrichtung nach Anspruch 1 oder 2, **dadurch gekennzeichnet, dass** an dem Gurtband (2; 102) eine erste Befestigungsvorrichtung (5a) zur Befestigung des ersten Anpassungselementes (3) angeordnet ist.

4. Sicherungsvorrichtung nach einem der vorhergehenden Ansprüche,
**dadurch gekennzeichnet,**
**dass** die erste Befestigungsvorrichtung (5a) zumindest ein erstes Befestigungselement (6a) aufweist.

5. Sicherungsvorrichtung nach Anspruch 4, **dadurch gekennzeichnet, dass** das Befestigungselement (6a) als Manschette ausgebildet ist, wobei die Manschette das Anpassungselement (3) und das Gurtband (2) umschließt.

6. Sicherungsvorrichtung nach einem der vorhergehenden Ansprüche,
**dadurch gekennzeichnet, dass** zumindest ein die Innenkammer (104) aufweisender Abschnitt des Anpassungselementes (3; 8; 9; 103) in Gebrauchsstellung auf der dem zu sichernden Gut oder der zu sichernden Person zugewandten Seite des Gurtbandes (2; 7; 102) angeordnet ist.

7. Sicherungsvorrichtung nach einem der vorhergehenden Ansprüche,
**dadurch gekennzeichnet, dass** das Anpassungselement (3; 8; 9; 103) als aufblasbares Luftkissen ausgebildet ist.

8. Sicherungsvorrichtung nach einem der vorhergehenden Ansprüche,
**dadurch gekennzeichnet, dass** das Anpassungselement (3; 8; 9; 103) zwei oder mehr Innenkammern (104) aufweist.

9. Sicherungsvorrichtung nach Anspruch 8, **dadurch gekennzeichnet, dass** eine Fluidverbindung zwischen den zumindest zwei Innenkammern (104) besteht.

10. Sicherungsvorrichtung nach einem der vorhergehenden Ansprüche,
**dadurch gekennzeichnet, dass** das Anpassungselement (3; 8; 9; 103) lösbar mit dem Gurtband (2; 7; 102) verbunden ist.

11. Sicherungsvorrichtung nach einem der vorhergehenden Ansprüche,
**dadurch gekennzeichnet, dass** das Anpassungselement (3; 8; 9; 103) abschnittsweise entlang der Längsrichtung (L) des Gurtbandes (2; 7; 102) zumindest einen Großteil der Breite des Gurtbandes (2; 7; 102) überdeckt.

12. Sicherungsvorrichtung nach einem der vorhergehenden Ansprüche,
**dadurch gekennzeichnet, dass** zumindest eine zweite Befestigungsvorrichtung (5b) zur Befestigung des zweiten Anpassungselementes (8) vorgesehen ist.

13. Sicherungsvorrichtung nach einem der vorhergehenden Ansprüche, soweit auf Anspruch 3 rückbezogen, **dadurch gekennzeichnet, dass** die erste Befestigungsvorrichtung (5a) ein erstes Befestigungselement (6a; 106) umfasst, wobei das Befestigungselement (6a; 106) elastisch ausgebildet ist.

14. Sicherungsvorrichtung nach einem der vorhergehenden Ansprüche, **dadurch gekennzeichnet, dass** die Ventilanordnung zumindest ein elektromagnetisch betätigtes Ventil umfasst.

15. Sicherungsvorrichtung nach einem der vorhergehenden Ansprüche, **dadurch gekennzeichnet, dass** die Ventilanordnung eine Steuerungsvorrichtung zur Regelung des in der Innenkammer (104) des ersten Anpassungselementes (3; 103) herrschenden Druckes umfasst.

## Claims

1. A securing device for securing items or persons, comprising
at least a first belt strap (2; 102),
at least a first adjustment element (3; 103) which is arranged on the first belt strap (2; 102) and comprises at least a first inner chamber (104), the total volume of the first adjustment element (3; 103) being variable,
a second belt strap (7), at least a second adjustment element (8) which is arranged on the second belt strap (7) and comprises at least one inner chamber being provided,
a third adjustment element (9) arranged on the second belt strap (7),
a first feeding means (10a) comprising a first line (11a) for feeding a filling medium into the at least first inner chamber (104) of the first adjustment element (3; 103),
a second feeding means (10b) for feeding a filling medium into the second adjustment element (8) and/or the third adjusting element (9),
a first actuating device (12a) for actuating the first feeding means (10a), and a second actuating device (12b) for actuating the second feeding means (10b),
wherein the actuating device (12a; 12b) comprisesat least one manual pump device (13; 15), wherein a manually actuatable valve arrangement for controlling the amount of filling medium to be discharged from the first inner chamber (104) of the first adjustment element (3; 103) is provided, and wherein the actuation devices (12a, 12b) and the manually actuatable valve arrangement are each designed for multiple actuation cycles, **characterized in**
**that** the second feeding means (10b) comprises a plurality of lines (11b; 11c), the lines (11b; 11c) being interconnected in such a way that one of the lines (11b; 11c), in the form of a main supply line (11b), and two further lines (11c) are branched off, such that the second adjustment element (8) and the third adjustment element (9) can be filled via the one main supply line (11b).

2. The securing device according to claim 1, **characterized in that** the lines (11a, 11b, 11c) are elastic.

3. The securing device according to either claim 1 or 2, **characterized in that** a first fastening device (5a) for fastening the first adjustment element (3) is arranged on the belt strap (2; 102).

4. The securing device according to any of the preceding claims, **characterized in that** the first fastening device (5a) has at least a first fastening element (6a).

5. The securing device according to claim 4, **characterized in that** the fastening element (6a) is designed as a sleeve, the sleeve enclosing the adjustment element (3) and the belt strap (2).

6. The securing device according to any of the preceding claims, **characterized in that** at least one portion of the adjustment element (3; 8; 9; 103) that has the inner chamber (104) is arranged, in a use position, on the side of the belt strap (2; 7; 102) facing the item to be secured or the person to be secured.

7. The securing device according to any of the preceding claims, **characterized in that** the adjustment element (3; 8; 9; 103) is designed as an inflatable air cushion.

8. The securing device according to any of the preceding claims, **characterized in that** the adjustment element (3; 8; 9; 103) has two or more inner chambers (104).

9. The securing device according to claim 8, **characterized in that** there is a fluid connection between the at least two inner chambers (104).

10. The securing device according to any of the preceding claims, **characterized in that** the adjustment element (3; 8; 9; 103) is releasably connected to the belt strap (2; 7; 102).

11. The securing device according to any of the preceding claims, **characterized in that** the adjustment element (3; 8; 9; 103) covers at least a large part of the width of the belt strap (2; 7; 102) in portions along the longitudinal direction (L) of the belt strap (2; 7; 102).

12. The securing device according to any of the preceding claims, **characterized in that** at least a second fastening device (5b) for fastening the second adjustment element (8) is provided.

13. The securing device according to any of the preceding claims, as far as dependent upon claim 3, **characterized in that** the first fastening device (5a) comprises a first fastening element (6a; 106), the fastening element (6a; 106) being elastic.

14. The securing device according to any of the preceding claims, **characterized in that** the valve arrangement comprises at least one electromagnetically actuated valve.

15. The securing device according to any of the preceding claims, **characterized in that** the valve arrangement comprises a control device for regulating the pressure prevailing in the inner chamber (104) of the first adjustment element (3; 103).

## Revendications

1. Dispositif de sécurisation permettant de sécuriser des articles ou des personnes, comprenant
au moins une première sangle (2 ; 102),
au moins un premier élément d'ajustement (3 ; 103) disposé sur la première sangle (2 ; 102) et comportant au moins une première chambre intérieure (104), le volume total du premier élément d'ajustement (3 ; 103) étant variable,
une deuxième sangle (7), au moins un deuxième élément d'ajustement (8) disposé sur la deuxième sangle (7) et comportant au moins une chambre intérieure étant prévu,
un troisième élément d'ajustement (9) disposé sur la deuxième sangle (7),
un premier appareil d'alimentation (10a) comportant une première conduite (11a) et permettant d'alimenter un milieu de remplissage dans l'au moins une première chambre intérieure (104) du premier élément d'ajustement (3 ; 103),
un deuxième appareil d'alimentation (10b) permettant d'alimenter un milieu de remplissage dans le deuxième élément d'ajustement (8) ou le troisième élément d'ajustement (9),
un premier dispositif d'actionnement (12a) permettant d'actionner le premier appareil d'alimentation (10a) et un deuxième dispositif d'actionnement (12b) permettant d'actionner le deuxième appareil d'alimentation (10b),
le dispositif d'actionnement (12a ; 12b) comprenant au moins un appareil de pompage manuel (13 ; 15), un agencement de soupape actionnable manuellement et permettant de commander la quantité de milieu de remplissage à évacuer hors de la première chambre intérieure (104) du premier élément d'ajustement (3 ; 103) étant prévu, et
le dispositif d'actionnement et l'agencement de soupape actionnable manuellement étant respectivement conçus pour plusieurs cycles d'actionnement,
**caractérisé en ce**
**que** le deuxième appareil d'alimentation (10b) comprend plusieurs conduites (11b ; 11c), les conduites (11b ; 11c) étant reliées entre elles de telle sorte que l'une des conduites (11b ; 11c) est déviée en tant que conduite d'alimentation principale (11b) et deux autres conduites (11c), de sorte que le deuxième élément d'ajustement (8) et le troisième élément d'ajustement (9) peuvent être remplis par l'intermédiaire de la conduite d'alimentation principale (11b).

2. Dispositif de sécurisation selon la revendication 1, **caractérisé en ce que** les conduites (11a, 11b, 11c) sont élastiques.

3. Dispositif de sécurisation selon la revendication 1 ou 2, **caractérisé en ce qu'**un premier dispositif de fixation (5a) permettant de fixer le premier élément d'ajustement (3) est disposé sur la sangle (2 ; 102).

4. Dispositif de sécurisation selon l'une des revendications précédentes, **caractérisé en ce que** le premier dispositif de fixation (5a) présente au moins un premier élément de fixation (6a).

5. Dispositif de sécurisation selon la revendication 4, **caractérisé en ce que** l'élément de fixation (6a) est réalisé en tant que manchon, le manchon entourant l'élément d'ajustement (3) et la sangle (2).

6. Dispositif de sécurisation selon l'une des revendications précédentes, **caractérisé en ce qu'**au moins une section de l'élément d'ajustement (3 ; 8 ; 9 ; 103) présentant la chambre intérieure (104) est disposée, en position d'utilisation, sur la face de la sangle (2 ; 7 ; 102) tournée vers l'article à sécuriser ou la personne à sécuriser.

7. Dispositif de sécurisation selon l'une des revendications précédentes, **caractérisé en ce que** l'élément d'ajustement (3 ; 8 ; 9 ; 103) est réalisé en tant que coussin d'air gonflable.

8. Dispositif de sécurisation selon l'une des revendications précédentes, **caractérisé en ce que** l'élément d'ajustement (3 ; 8 ; 9 ; 103) présente deux chambres intérieures (104) ou plus.

9. Dispositif de sécurisation selon la revendication 8, **caractérisé en ce qu'**une liaison fluidique existe entre les au moins deux chambres intérieures (104).

10. Dispositif de sécurisation selon l'une des revendications précédentes, **caractérisé en ce que** l'élément d'ajustement (3 ; 8 ; 9 ; 103) est relié de manière amovible à la sangle (2 ; 7 ; 102).

11. Dispositif de sécurisation selon l'une des revendications précédentes, **caractérisé en ce que** l'élément d'ajustement (3 ; 8 ; 9 ; 103) recouvre, au moins dans certaines régions, au moins une grande partie de la largeur de la sangle (2 ; 7 ; 102) le long de la direction longitudinale (L) de la sangle (2 ; 7 ; 102).

12. Dispositif de sécurisation selon l'une des revendications précédentes , **caractérisé en ce qu'**au moins un deuxième dispositif de fixation (5b) permettant de fixer le deuxième élément d'ajustement (8) est prévu.

13. Dispositif de sécurisation selon l'une des revendications précédentes lorsqu'elle dépend de la revendication 3, **caractérisé en ce que** le premier dispositif de fixation (5a) comprend un premier élément de fixation (6a ; 106), l'élément de fixation (6a ; 106) étant élastique.

14. Dispositif de sécurisation selon l'une des revendications précédentes, **caractérisé en ce que** l'agencement de soupape comprend au moins une soupape à actionnement électromagnétique.

15. Dispositif de sécurisation selon l'une des revendications précédentes, **caractérisé en ce que** l'agencement de soupape comprend un dispositif de commande permettant de réguler la pression régnant dans la chambre intérieure (104) du premier élément d'ajustement (3 ; 103).
